# EUROPEAN PATENT SPECIFICATION

(11) **EP 4 222 030 B1**
(45) Date of publication and mention of the grant of the patent: **27.11.2024**
(21) Application number: 21786118.6
(22) Date of filing: 27.09.2021
(51) Int. Cl.: B60T 11/16, B60T 11/18, B60T 13/14

(54) **BRAKING DEVICE FOR AUTONOMOUS GUIDANCE AND METHOD OF OPERATING SAID BRAKING DEVICE**
BREMSVORRICHTUNG ZUR AUTONOMEN LENKUNG UND VERFAHREN ZUM BETREIBEN EINER SOLCHEN BREMSVORRICHTUNG
DISPOSITIF DE FREINAGE POUR GUIDAGE AUTONOME ET PROCÉDÉ DE FONCTIONNEMENT D'UN TEL DISPOSITIF DE FREINAGE

(30) Priority: 02.10.2020 IT 202000023314
(43) Date of publication of application: 09.08.2023
(73) Proprietor: VHIT S.p.A., 26010 Offanengo (IT)
(72) Inventor: MARTELLO, Fabio, 26013 Crema (IT); CADEDDU, Leonardo, 26013 Crema (IT); CALONGHI, Andrea, 26022 Castelverde (Cremona) (IT)
(74) Representative: Robba, Pierpaolo
(86) International application number: PCT/EP2021/076475
(87) International publication number: WO 2022/069398

(56) References cited:
- WO-A1-2018/228856
- US-A1- 2004 212 248
- US-B2- 7 104 058

## Description

### Technical Field

The present invention relates, in general, to a hydraulic braking device for a motor vehicle and, more particularly, to a braking device suitable for autonomous guidance of the vehicle. The present invention also relates to a method of operating such braking device.

The present invention applies in particular to agricultural tractors and the like, which have dual brake pedals and can perform a "steer-by-braking function" (SBF).

### Prior Art

The use of hydraulic braking systems comprising one or more master cylinders with a pump function, operated by a pedal or respective pedals, is known in the motor vehicle industry.

Many such braking systems also include hydraulic braking assistance devices or servo-devices, also referred to as hydroboosters, associated with each master cylinder.

An example of a braking system of this type is described in patent application US2004212248 A1, in the name of the Applicant.

The use of hydraulic braking systems comprising two coupled master cylinders is also known in the field of agricultural tractors and the like.

Such braking systems typically use two pedals to control the braking of a rear right wheel and a rear left wheel, respectively, exerting respective braking pressures.

The two pedals can be actuated by an operator individually, thereby steering the vehicle, hence the name "steer-by-braking function" (SBF).

The two pedals can be actuated by an operator simultaneously, thus simultaneously braking at least both of the rear wheels of the vehicle. In this case, to ensure balanced braking, in other words braking of substantially equal intensity on both rear wheels, devices for balancing the braking pressures are used.

An example of a braking system of this type is described in patent application WO2017013595 A1, in the name of the Applicant.

Electrohydraulic braking systems comprising two brake pedals and two or more solenoid valves for regulating the flow of liquid to a first and a second brake of the vehicle (right and left brake), as described in US2019184952 A1, are also known. Such a system may further comprise a steering control system that can act on the brakes to facilitate steering of the vehicle. On the basis of a signal supplied by turning the steering wheel of the vehicle, the control unit acts on the solenoid valves of the braking system to actuate the brake corresponding to the direction in which the vehicle is to be steered.

The abovementioned electrohydraulic braking system has the drawback of requiring special actuators to allow steering by means of actuation of the brakes. The Applicant has thus observed that the abovementioned electrohydraulic system is difficult to implement in existing vehicles having purely hydraulic braking systems that are not controlled electronically.

The aim of the present invention is to overcome the problems and limitations of the prior art by providing a hydraulic braking device that is suitable for use in autonomous guidance and that can be implemented in existing vehicles equipped with hydraulic braking systems inexpensively and without requiring special actuators.

This and other aims are achieved with the braking device as claimed in the attached claims.

### Description of the Invention

The hydraulic braking device of a vehicle according to the invention comprises a master cylinder and a servo-device. In the master cylinder, a hydraulic piston defines a pressure chamber which is adapted to contain a pressurized liquid and in which a control pressure is generated that is transmitted to one or more brake(s) of the vehicle. In the servo-device, a plunger defines a first chamber and a second chamber of the servo-device, said chambers being associated with communication means adapted to establish, when the braking device is in a rest condition, a hydraulic communication between the first chamber and the second chamber and to interrupt said communication when the braking device is actuated.

The braking device comprises a shuttle piston, which is connected to a thrusting rod associatable with a brake pedal and is mounted to be sealingly slidable in a plunging piston movably integral to the plunger of the servo-device.

According to the invention, the braking device comprises a solenoid valve and a hydraulic coupling connected in a movably integral manner to the thrusting rod and comprising an inlet aperture opening into a rear inner cavity of the hydraulic coupling. This inlet aperture is hydraulically connected to the solenoid valve, preferably supplied by a hydraulic power unit of the vehicle.

The braking device according to the invention further comprises a stem, which is associated, on the side of a first end thereof, to the hydraulic coupling and having, on the side of its second end, the shape of a spherical tip.

The braking device according to the invention also comprises a distributor block sealingly slidably received within the plunging piston and adapted to abut against the shuttle piston.

According to the invention, the spherical tip of the stem is associated, in an articulated manner, to the distributor block. Furthermore, the rear inner cavity of the hydraulic coupling is in hydraulic communication with a through-channel formed within the stem, which is in turn in hydraulic communication with a driving duct formed in the distributor block, said driving duct opening into a region comprised between the distributor block and the shuttle piston.

According to the invention, between the distributor block and the spherical tip of the stem there are preferably arranged two gaskets longitudinally stacked on each other and having inner surfaces suitably shaped so as to match the spherical shape of the spherical tip. Said gaskets are configured so as to ensure articulation of the spherical tip and to ensure hydraulic sealing with said spherical tip.

The braking device with the features described above makes it possible to incorporate, between the thrusting rod and the shuttle piston, a plurality of elements, described above, adapted to actuate the servo-device and, through these elements, hydraulically actuate the servo-device, said hydraulic actuation advantageously being managed by ordinary proportional valves and by the hydraulic power unit of the vehicle.

According to the invention, the braking device is the first braking device of a pair of braking devices (which are substantially the same) of a braking system, in which a first braking device is arranged to actuate a first brake, associated with a rear right wheel of the vehicle, and a second braking device is arranged to actuate a second brake associated to a rear left wheel of the vehicle.

Each braking device of such a braking system preferably has a balancing device, which comprises a balancing valve that is normally closed and adapted, when braking is actuated, to open a hydraulic connection between the pressure chamber of the respective braking device and a balancing duct of the braking system, to ensure balanced braking.

According to the invention, a method of operating the braking device provides for said device to be actuated both manually and automatically.

The manual actuation comprises the steps of:
- acting onto the brake pedal,
- transferring, through the thrusting rod and the stem, the thrust exerted by the pedal to the distributor block, which in turn exerts a thrust onto the shuttle piston of the braking device, thus causing advancement thereof towards the master cylinder of the braking device,
- actuating, by means of the advancement of the shuttle piston, the servo-device of the braking device,
- actuating, by means of the combined action of the shuttle piston and the servo-device, a plunging piston to engage the hydraulic piston in the master cylinder, and
- generating, by means of the hydraulic piston in the master cylinder, a pressure in the pressure chamber, said pressure being adapted to operate one or more brake(s) of the vehicle connected to the braking device.

The automatic actuation comprises the steps of:
- providing, by means of the solenoid valve, preferably supplied by a hydraulic power unit of the vehicle, a suitable hydraulic pressure in the inlet aperture of the hydraulic connection,
- transferring said hydraulic pressure, through the channel of the stem and the driving duct of the distributor block, to the region comprised between the distributor block and the shuttle piston,
- generating, by means of said hydraulic pressure in the region comprised between the distributor block and the shuttle piston, a thrust onto the shuttle piston, thus causing advancement thereof towards the master cylinder of the braking system,
- actuating, by means of the advancement of the shuttle piston, the servo-device of the braking system,
- actuating, by means of the combined action of the shuttle piston and the servo-device, the plunging piston to engage the hydraulic piston in the master cylinder, and
- generating, by means of the hydraulic piston in the master cylinder, a pressure in the pressure chamber, said pressure being adapted to operate one or more brake(s) of the vehicle connected to the braking system.

According to the invention, a method of operating the braking system comprises the step of:
- simultaneously operating, manually or automatically, both braking devices of the braking system, and balancing the control pressures at the outlet of the pressure chambers of the master cylinders,
or the step of:
- individually actuating, manually or automatically, only one of the two braking devices of the braking system so as to thus perform a steer-by-braking function. The braking device according to the present invention is advantageously a device adapted for "autonomous guidance", since it makes it possible to actuate braking autonomously, without the need to act on the brake pedal. The braking device offers the further advantage that it can also be actuated manually, by acting on the brake pedal.

In agricultural tractors and the like, a braking system according to the invention not only makes it possible to actuate braking autonomously, but also allows the vehicle to be steered autonomously, acting on only one of the two braking devices of the system (the "steer-by-braking function"). Again in this case, the system also offers the possibility of actuating the individual braking devices manually, by acting on the brake pedals.

The invention thus makes it possible to achieve autonomous guidance in agricultural tractors and the like at low cost, allowing the switch from autonomous guidance to manual guidance simply.

### Brief Description of the Figures

These and other features and advantages of the present invention will become clear from the following description of preferred embodiments, provided by way of non-limiting example, accompanied by the attached figures, in which elements designated using the same or similar reference numbers are elements with the same or similar operation and structure. In said figures:
Figure 1 shows a view in longitudinal section of a braking device according to the present invention, in a rest condition;
Figure 2 shows a view in longitudinal section of a braking device according to the present invention, in an automatic actuation condition;
Figure 3 shows an enlarged view of a portion of the device shown in Figure 1;
Figure 4 shows an enlarged view of a portion of the device shown in Figure 2.

### Description of Preferred Embodiments

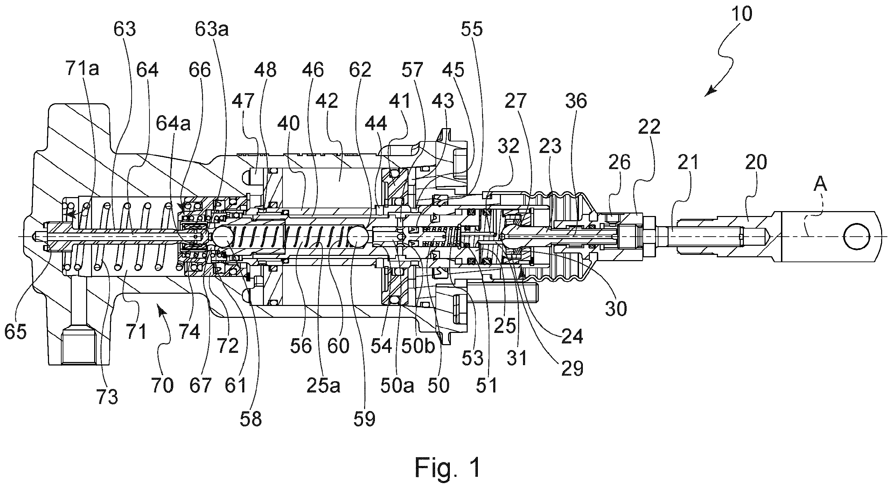

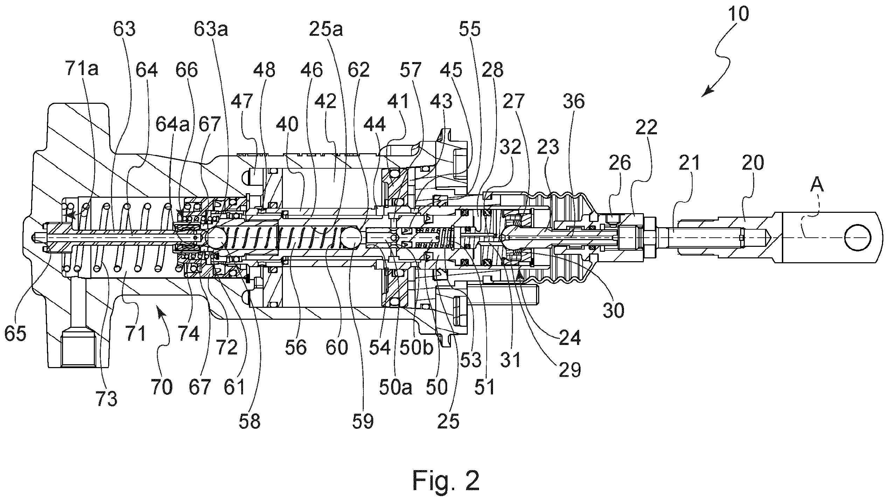

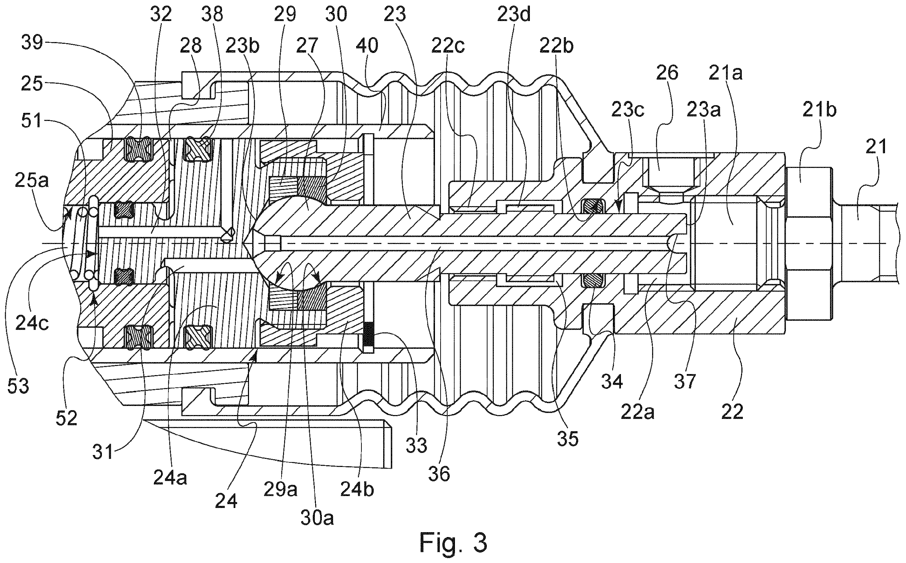

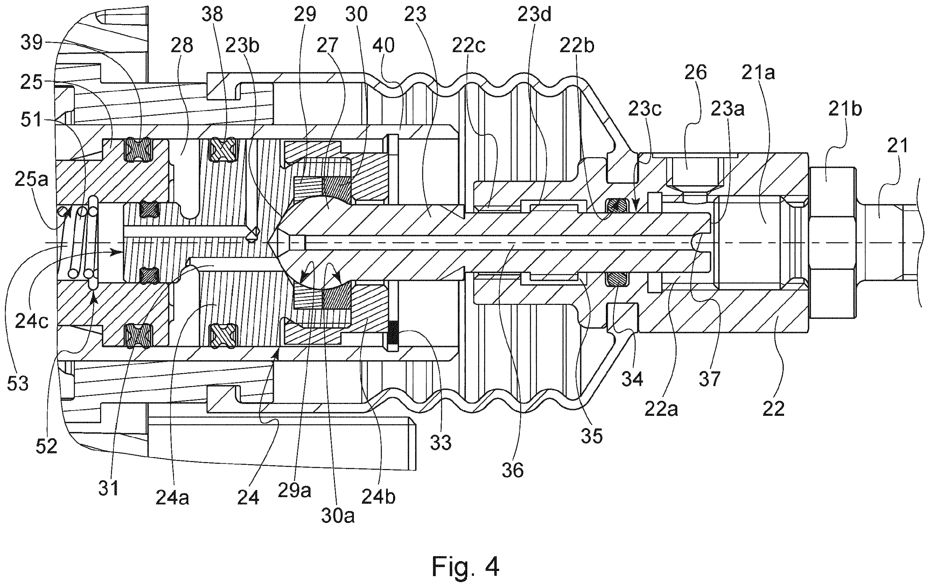

A braking device 10 according to an embodiment of the present invention, for controlling hydraulic brakes of a motor vehicle, is described below with reference to Figures 1-4; in particular, in Figures 1 and 3 the device is depicted in a rest condition (i.e. a condition in which the brakes are not actuated), and in Figures 2 and 4 the same device is depicted in a condition in which braking is actuated by means of automatic actuation.

The braking device 10 comprises a thrusting rod 21, which can be actuated in a known manner by means of a brake pedal (not shown), and a master cylinder 70 adapted to convert the thrust exerted by means of the brake pedal into a hydraulic pressure for actuating the brakes of the vehicle. The thrusting rod 21 is connected to the brake pedal, for example by means of a fork 20. The master cylinder 70 comprises a pressure chamber 71 inside which a hydraulic piston 72 operates, this hydraulic piston being adapted to transfer the hydraulic pressure to the brakes of the vehicle, and a spring 73, adapted to act against the thrust exerted by the hydraulic piston 72. Preferably, said elements extend longitudinally along an axis A of the braking device 10.

In the remainder of the description, for the sake of simplicity, the term "front" will be used to designate elements closer to or facing the master cylinder 70 and the term
"rear" to designate elements closer to or facing the brake pedal.

The braking device 10 according to the present invention is equipped with a braking servo-device (also referred to as a hydrobooster), of known type, to assist braking of the vehicle by providing a predetermined servo pressure. The general structure of the servo-device included in the braking device 10 according to the present invention corresponds to that described in US2004212248 A1, to which reference should be made for a detailed description of the structure and operation of this device. Only the main components of the servo-device and its operation will be described below, briefly, attention being focused on the aspects necessary to understand the present invention.

With particular reference to Figures 1 and 2, the servo-device comprises, in a known manner, a plunging piston 40 mounted slidingly in the longitudinal direction and movably integral to an annular plunger 41 that separates a front chamber 42 from a rear chamber 43 of the servo-device. A shuttle piston 25 is also housed inside the plunging piston 40, slidingly with respect to the latter. Said shuttle piston 25 is associated with the hydraulic piston 72 of the master cylinder and is held in position, in a known manner, by internal springs 74 of the master cylinder 70.

In a rest condition, the front chamber 42 and the rear chamber 43 are hydraulically connected, for example by means of first holes 44 and second holes 45 formed radially in the plunging piston 40, which place the front chamber 42 and the rear chamber 43 in communication, respectively, with a channel 46, which is annular, formed on the outer surface of the shuttle piston 25. In said rest condition, the same pressure prevails in the front chamber 42 and in the rear chamber 43 of the servo-device, in particular a high pressure, by virtue of the fact that pressurized oil from a volumetric pump and/or from an accumulator external to the braking device 10 flows in the rear chamber 43, in a known manner.

In an actuation condition of the braking device 10, the shuttle piston 25 slides relative to the plunging piston 40, advancing towards the master cylinder 70. The shuttle piston 25 is configured in such a way that its advancement results, in a known manner, in an interruption of the hydraulic connection between the front chamber 42 and the rear chamber 43 of the servo-device. The braking device 10 is further configured such that the advancement of the shuttle piston 25 also causes, in a known manner, the opening of a hydraulic connection between the front chamber 42 of the servo-device and a discharge chamber 47, for example by means of a discharge hole 48 formed in the plunging piston 40 and said channel 46 of the shuttle piston 25.

Owing to the difference in pressure created between the front chamber 42 of the servo-device, at low pressure as it is in communication with the discharge chamber 47, and the rear chamber 43 of the servo-device, at high pressure, the plunging piston 40 slides towards the hydraulic piston 72 of the master cylinder 70. The plunging piston 40, advancing, causes the closure of a hydraulic connection present, in rest conditions, between the pressure chamber 71 and the discharge chamber 47 and pushes the hydraulic piston 72 of the master cylinder 70, which thus exerts the pressure necessary to actuate the brakes of the vehicle. The servo-device thus performs the function of assisting braking.

With particular reference to Figures 3 and 4, according to the present invention, the thrusting rod 21 of the braking device 10 is connected in a movably integral manner to a hydraulic coupling 22, which is longitudinally hollow. For example, the thrust rod 21 has an externally threaded end part 21a screwed into a rear cavity 22a of the hydraulic coupling, which is threaded internally.

The hydraulic coupling 22 is in turn associated with a stem 23, which is coaxial to the hydraulic coupling 22 and is partly housed therein, preferably with some clearance in the longitudinal direction and so that it cannot slip out of said coupling. For example, the stem 23 comprises a coupling portion 23d, which is threaded externally, and the hydraulic coupling 22 comprises a front inlet portion 22c, which is threaded internally and configured to be coupled with the coupling portion 23d of the stem 23 when the latter is inserted in the hydraulic coupling 22, after which there is a recess 35, configured to house, with clearance, the coupling portion 23d of the stem 23 after it has passed through the front inlet portion 22c of the hydraulic coupling 22. This advantageously makes it possible to connect the stem 23 to the hydraulic coupling 22, preventing them from coming apart, while at the same time making up for any misalignments.

The hydraulic coupling 22 comprises an inlet aperture 26, preferably formed radially, opening into the rear cavity 22a and connected to a tube (not shown), preferably a flexible tube, associated with an electronically controlled proportional valve (not shown), supplied by a hydraulic power unit of the vehicle.

Inside the rear cavity 22a of the hydraulic coupling 22, a first end 23a (rear end) of the stem 23 is in abutment, with clearance, against the end part 21a of the thrusting rod. This clearance, along with the abovementioned clearance between the coupling portion 23d of the stem 23 and the recess 35 of the hydraulic coupling 22, helps make up for any misalignments. On the side from which the thrusting rod 21 is inserted in the hydraulic coupling 22, i.e. on rear side of the hydraulic coupling 22, the rear cavity 22a is fluid-tight, sealed by suitable connection means 21b. Moreover, on the side from which the stem 23 is inserted in the hydraulic coupling 22, i.e. on the front side of the hydraulic coupling 22, the rear cavity 22a is fluid-tight, sealed for example by means of an O-ring seal 34 housed in a groove 22b of the hydraulic coupling 22 and interacting with an outer surface 23c of the stem 23.

The stem 23 comprises an internal through-channel 36, formed coaxially with respect to said stem, which extends from the rear end 23a of the stem to a front end 23b of the stem. The inlet aperture 26 of the hydraulic coupling 22 is in hydraulic connection, through the rear cavity 22a, with the channel 36 of the stem 23 in correspondence with the rear end 23a thereof. Preferably, a radial score 37 is formed at the rear end 23a of the stem, adapted to ensure the hydraulic connection between the rear cavity 22a and the channel 36 when the rear end 23a of the stem is in abutment against the end part 21a of the thrusting rod 21. The stem 23, on the side of the its end front 23b, has the shape of a spherical tip 27, located externally to the hydraulic coupling 22. This spherical tip 27 is associated to a distributor block 24, housed inside the plunging piston 40 of the servo-device. This distributor block 24 abuts, at the rear, against a circlip 33, while at the front it is adapted to abut against the shuttle piston 25 of the servo-device.

Between the distributor block 24 and the spherical tip 27 of the stem 23, in the radial direction, there are two circular gaskets 29, 30, with a longitudinal axis substantially coincident with the axis A of the braking device 10 and hence substantially coaxial to the stem 23, arranged in contact with and next to one another. The inner surfaces 29a, 30a of the two circular gaskets are shaped appropriately so as to adapt to the spherical shape of the spherical tip 27 and interact sealingly with said spherical tip. Preferably, to facilitate insertion of the spherical tip 27 and the circular gaskets 29, 30, the distributor block 24 is divided in a main body 24a and a cap 24b, arranged at the side of the distributor block facing the hydraulic coupling 22, or at the rear side of the distributor block 24, from which, once the cap 24b has been removed, the spherical tip 27 and the associated gaskets 29, 30 are inserted. This cap 24b is adapted to close, for example by screwing, onto the main body 24a, after the insertion of the spherical tip 27 and the gaskets 29, 30, whereby said gaskets 29, 30 are retained, in a longitudinal direction, between the main body 24a and the cap 24b of the distributor block.

The gaskets 29, 30 are preferably made of PTFE or another similar material and are configured so as to ensure articulation of the spherical tip 27 and to ensure hydraulic sealing.

A driving duct 31, which is a through-duct, that hydraulically connects the second end 23b of the stem 23 to a region 28 at the front of the main body 24a, comprised between the latter and the shuttle piston 25 is formed, preferably in the longitudinal direction, in the main body 24a of the distributor block 24.

Because there is clearance between the second end 23b of the stem and the main body 24a of the distributor block, the channel 36 of the stem 23 is in hydraulic connection with the driving duct 31 and hence with said region 28 at the front of the main body 24a. The region 28 is hydraulically sealed, by virtue of appropriate O-ring seals 38, 39 arranged between the main body 24a of the distributor block and the plunging piston 40 and between the shuttle piston 25 and the plunging piston 40, respectively.

In the embodiment shown, the braking device 10 is further equipped with a pre-filling device, i.e. a device adapted to supply pressurized liquid so as to take up the clearance existing in the braking circuit downstream of the master cylinder 70 before the start of braking proper. Pre-filling devices of known type are described, for example, in patents US2004212248 A1 and WO2017037666 A1, in the name of the Applicant. Only the main components of the pre-filling device and its operation will be described below, briefly, attention being focused on the aspects necessary to understand the present invention.

The pre-filling device according to the embodiment shown in Figures 1 and 2 is housed in a cavity 25a, a longitudinal cavity, formed inside the shuttle piston 25, and comprises a valve piston 50, acting as hydraulic valve, in abutment against a front end of a spring 51, the rear end of which is, conversely, secured to a seat 52 formed in the cavity 25a of the shuttle piston 25, so as to be unable to slide longitudinally. The spring 51 is housed in a chamber 53 comprised between a front end 24c of the distributor block 24 and the valve piston 50 and tends to push the latter forward, in abutment against a shoulder 54 present in the cavity 25a of the shuttle piston 25, for example formed Integrally with said shuttle piston 25. The valve piston 50 is configured to close, at the front, in a fluid-tight manner, the chamber 53 in which the spring 51 is located, for example by means of an O-ring seal 55 housed in a seat of the valve piston 50 and adapted to interact with the walls of the cavity 25a of the shuttle piston 25. The chamber 53, on the other hand, is in communication, at the rear, with a region at atmospheric pressure, in such a way that the chamber 53 is also at atmospheric pressure. This communication is achieved, for example, by means of a duct 32 formed in the main body 24a of the distributor block 24.

The valve piston 50 of the pre-filling device comprises a duct 50a, which is longitudinal, and which is open at the front towards a front portion of the cavity 25a (referred to hereinbelow as the pre-filling duct 56) and blind at the rear, and a radial hole (hole in the valve piston) 50b communicating with this duct 50a. Furthermore, when the valve piston 50 is in abutment against the shoulder 54, the radial hole 50b in the valve piston is in hydraulic communication with radial holes 57 formed in the shuttle piston 25 (holes in the shuttle piston) and communicating, in turn, with the second holes 45 in the plunging piston 40 and hence with the rear chamber 43 of the servo-device. In a rest condition of the braking device 10, the radial holes 57 in the shuttle piston 25 are also in hydraulic communication with the channel 46 in the shuttle piston 25 and hence with the front chamber 42 of the servo-device.

According to the embodiment shown, the pre-filling device further comprises a valve unit positioned at the front with respect to the valve piston 50 and comprising a first sphere (front sphere) 58 and a second sphere (rear sphere) 59 between which there is a spring 60. The spring 60 is configured to keep the front sphere 58 in abutment against a first shoulder 61 formed in the pre-filling duct 56 and the rear sphere 59 in abutment against a second shoulder 62 formed in the pre-filling duct 56, thereby cutting off the hydraulic communication through the pre-filling duct 56.

The pre-filling device further comprises a stem 63, which is fixed, positioned in such a way that its rear end 63a can interact with the front sphere 58, pushing same and opening the hydraulic communication between the pre-filling duct 56 and the pressure chamber 71 of the master cylinder 70 when the shuttle piston 25 starts to advance towards the master cylinder 70.

The pre-filling device described above is only one example of a pre-filling device that can be used in the braking device 10 according to the present invention. Other pre-filling devices, such as those disclosed in the abovementioned documents, may just as easily be used without departing from the scope of the invention.

Briefly, the pre-filling device functions as follows. In the rest position, the servo pressure in the front 42 and rear 43 chambers of the servo-device, connected to one another as described above, supplies, by means of the channel 46 in the shuttle piston 25, through the holes 57 in the shuttle piston 25 and the hole 50b in the valve piston 50, the pre-filling duct 56.

In the rest position, the front sphere 58 is closed and therefore the liquid coming from the rear chamber 43 increases in pressure in the pre-filling duct 56, exerting a hydraulic thrust on the valve piston 50 until it overcomes the load of the spring 51 arranged in the chamber 53, which, as stated above, is at atmospheric pressure. Once the "pre-filling pressure" has been reached, the valve piston 50 closes the hole 50b in the shuttle piston, blocking same.

The pre-filling device stays in said position while the pressure in the pre-filling duct 56 is the same as or greater than the pre-filling pressure.

When the braking device is actuated, following the advancement of the shuttle piston 25, the front sphere 58 is pushed by the stem 63, opening the hydraulic communication between the pre-filling duct 56 and the pressure chamber 71 of the master cylinder 70 and the consequent passage of pressurized liquid from the pre-filling duct 56 to the pressure chamber 71, so as to take up the clearances present in the braking circuit downstream of the master cylinder 70 before the start of braking proper. The abovementioned opening of hydraulic communication between the pre-filling duct 56 and the pressure chamber 71 of the master cylinder 70 causes a fall in pressure in the pre-filling duct 56, such that the valve piston 50 of the pre-filling device again advances against the shoulder 54 present in the cavity 25a in the shuttle piston 25, reconnecting the rear chamber 43 of the servo-device to the pre-filling duct 56. The pre-filling device thus acts in such a way as to keep the pressure in the pre-filling duct 56 substantially constant through a modulated continuous movement of the valve piston 50 which causes opening and closure of the hydraulic communication between the pre-filling duct 56 and the rear chamber 43 of the servo-device. This constant pressure value is determined by the thrust exerted by the spring 51. According to other embodiments, the braking device according to the present invention does not have a pre-filling device.

According to the embodiment of the present invention described, the braking device 10 represents the first braking device of a pair of braking devices (which are substantially the same) of a braking system (not shown) of an agricultural tractor or the like. In such braking systems, as is known, each braking device is associated with a respective brake of a rear wheel of the agricultural tractor, so that it can act on a single rear brake and perform the function known as "steer-by-braking". In such braking systems, when normal braking is desired, rather than steer-by-braking, acting on the pedals of both braking devices, it is necessary to balance out the control pressures provided by the master cylinders of the pair of braking devices so as to ensure balanced braking, i.e. braking of substantially equal intensity on both rear wheels. To this end, the braking devices are equipped with balancing devices.

The braking device 10 according to the embodiment shown includes a balancing device with a general structure, described below only briefly, corresponding to that described in patent application WO2017013595 A1, in the name of the Applicant, to which reference should be made for a more detailed description. With particular reference to Figures 1 and 2, the balancing device comprises the abovementioned stem 63, which is coaxial to the shuttle piston 25 and fixed in correspondence with a front end wall 71a of the pressure chamber 71 of the master cylinder 70. A balancing channel 64 is formed inside the stem 63. A front end of the balancing channel 64 is connected, by means of a hole 65, to a balancing duct (not shown), which is in turn in communication with a front end of a balancing duct of the second braking device of the pair of braking devices. A rear end of the balancing channel 64 ends with at least one radial hole 64a. This radial hole 64a is blocked by a balancing valve 66, which is normally closed, movably integral with the shuttle piston 25. The balancing valve 66 opens when the shuttle piston 25, as a result of the actuation of the braking device 10, moves towards the front part of the braking device 10. The radial hole 64a is thus uncovered, thereby placing the balancing channel 64 in hydraulic connection with the pre-filling duct 56 and hence with the pressure chamber 71 of the master cylinder 70, through a radial hole 67 formed in the shuttle piston 25.

Balancing between the control pressures prevailing inside the pressure chambers of the master cylinders of the two braking devices is thus actuated mechanically, after a predetermined stroke of the respective shuttle pistons.

According to another embodiment (not shown), the braking device does not form part of a braking system comprising a pair of braking devices but is a single device, and is therefore configured to control by itself the braking of the right and left wheels of the vehicle. In this embodiment, the braking device will therefore not have the balancing device. In this case, the stem 63 will only have the function of interacting with the front sphere 58 of the pre-filling device. The stem may therefore be a solid stem (not shown), without the balancing channel 64 and the related radial hole 64a.

The operation of the braking device 10 according to the present invention is described below.

Starting from the condition of rest described above and shown in Figures 1 and 3, the braking device 10 is actuated so as to generate the hydraulic pressure necessary for braking, by means of two alternative types of actuation, namely manual and automatic actuation.

In the case of manual actuation, braking is actuated by acting on the brake pedal. The thrust exerted by means of the brake pedal is transferred to the thrusting rod 21 and then, via the stem 23, to the distributor block 24, which, as it is in abutment against the shuttle piston 25, causes advancement of the latter towards the front part of the braking device 10.

The advancement of the shuttle piston 25 causes, in a known manner, actuation of the servo-device, by means of the intermittent interruption of the hydraulic connection between its front chamber 42 and its rear chamber 43. The actuation of the servo-device in combination with the shuttle piston 23 causes actuation of the plunging piston 40 which engages the hydraulic piston 72 of the master cylinder 70, causing it to advance. This advancement in turn generates a pressure in the pressure chamber 71 of the master cylinder 70 adapted to actuate one or more brakes of the vehicle connected to the braking device 10. In the case of automatic actuation, shown in Figures 2 and 4, braking is actuated by supplying an appropriate pressure at the inlet aperture 26 of the hydraulic coupling 22; this pressure, as described above, is regulated by a solenoid valve and supplied by the hydraulic power unit of the vehicle.

The pressure supplied at the inlet aperture 26 is transferred, via the channel 36 in the stem 23 and the driving duct 31 in the main body 24a of the distributor block 24, to the region 28 comprised between the main body 24a and the shuttle piston 25. The increase in pressure in the region 28 generates a thrust on the shuttle piston that causes the latter to advance towards the front part of the braking device 10. The usable area for generating the thrust on the shuttle piston 25 is the area between the guide diameter of the distributor block 24 and the diameter of the chamber 53.

As in the case of manual actuation, the advancement of the shuttle piston 25 causes actuation of the servo-device, by means of the intermittent interruption of the hydraulic connection between its front chamber 42 and its rear chamber 43, and the actuation of the servo-device in combination with the shuttle piston 25 causes actuation of the plunging piston 40 and thus advancement of the hydraulic piston 72 and consequent generation of a pressure in the pressure chamber 71 adapted to actuate one or more brakes of the vehicle connected to the braking device 10.

When braking is actuated by means of automatic actuation, the brake pedal of the braking device 10 itself also moves as if it was actuated manually, as it is connected, as described above, to the thrusting rod 21 which is brought towards the front part of the braking device 10 owing to the advancement of the plunging piston 40, to which the thrusting rod 21 is connected via the distributor block 24, the stem 23 and the hydraulic coupling 22. Obviously, in the case of automatic actuation, it is also possible to disengage the brake pedal from the respective fork 20.

When the braking device 10 has a pre-filling device, actuation of braking, whether manual or automatic, will include actuation of this pre-filling device, in the manner described above.

Advantageously, automatic actuation of the braking device makes it possible to control braking of the vehicle autonomously.

In the case of a braking system comprising a pair of braking devices 10, both braking devices may be actuated simultaneously, causing simultaneous braking of at least both rear wheels of the vehicle, or just one of the two braking devices may be actuated, performing the "steer-by-braking" function.

As in the case of the single braking device, the pair of braking devices is actuated manually or automatically.

When the braking devices are actuated simultaneously, if the braking devices are equipped with a balancing device, this makes it possible to balance out the control pressures at the outlet of the pressure chambers of the two master cylinders, ensuring the same braking action on at least both rear wheels of the vehicle.

Advantageously, automatic actuation of the braking devices of a braking system makes it possible to autonomously control not only braking of the vehicle but also steering of the vehicle, which is achieved, as stated above, by actuating only one of the two braking devices.

## Claims

1. Hydraulic braking device (10) for a vehicle, comprising a master cylinder (70) and a servo-device, wherein
- a hydraulic piston (72) of the master cylinder (70) defines a pressure chamber (71) which is adapted to contain a pressurized liquid and in which a control pressure is generated that is transmitted to one or more brake(s) of the vehicle;
- a plunger (41) of the servo-device defines a first chamber (42) and a second chamber (43) of the servo-device, said chambers being associated with communication means (44, 45, 46) adapted to establish, when the braking device (10) is in a rest condition, a hydraulic communication between the first chamber (42) and the second chamber (43) and to interrupt said communication when the braking device (10) is actuated;
- a shuttle piston (25), connected to a thrusting rod (21) associatable with a brake pedal, is mounted to be sealingly slidable in a plunging piston (40) movably integral to the plunger (41) of the servo-device,
**characterized in that** it comprises
- a hydraulic coupling (22) connected in a movably integral manner to the thrusting rod (21) and comprising an inlet aperture (26) opening into an rear inner cavity (22a) of the hydraulic coupling (22) and hydraulically connected to a solenoid valve,
- a stem (23) associated, on the side of a first end (23a) thereof, to the hydraulic coupling (22) and having, on the side of its second end (23b), the shape of a spherical tip (27);
- a distributor block (24) sealingly received within the plunging piston (40) and adapted to abut against the shuttle piston (25),
wherein the spherical tip (27) of the stem (23) is associated, in an articulated manner, to the distributor block (24), and wherein the rear inner cavity (22a) of the hydraulic coupling (22) is in hydraulic communication with a through-channel (36) formed within the stem (23), said through-channel (36) being in turn in hydraulic communication with a driving duct (31) formed in the distributor block (24), said driving duct opening into a region (28) comprised between the distributor block (24) and the shuttle piston (25).

2. Device according to claim 1, wherein between the distributor block (24) and the spherical tip (27) of the stem (23) there are arranged two gaskets (29, 30) longitudinally stacked on each other and having inner surfaces (29a, 30a) suitably shaped so as to match the spherical shape of the spherical tip (27), said gaskets (29, 30) being configured so as to ensure articulation of the spherical tip (27) and to ensure hydraulic sealing with said spherical tip (27).

3. Device according to claim 2, wherein the distributor block (24) is divided in a main body (24a) and a cap (24b), arranged at the side of the distributor block (24a) facing the hydraulic coupling (22), said cap (24b) being adapted to close onto the main body (24a), whereby said gaskets (29, 30) are retained, in a longitudinal direction, between the main body (24a) and the cap (24b) of the distributor block (24).

4. Device according to any of the preceding claims, wherein the stem (23) is partly housed, on the side of its first end (23a), within the hydraulic coupling (22), preferably with some clearance in the longitudinal direction and so that it cannot slip out of said coupling.

5. Device according to any of the preceding claims, wherein the region (28) comprised between the distributor block (24) and the shuttle piston (25) is a hydraulically sealed chamber.

6. Device according to any of the preceding claims, wherein the rear inner cavity (22a) of the hydraulic coupling (22) cooperates in a fluid-tight manner with the thrusting rod (21) and the stem (23).

7. Device according to any of the preceding claims, further comprising a pre-filling device, said pre-filling device including a valve piston (50) slidingly arranged in a cavity (25a) of the shuttle piston (25), and a chamber (53) defined in said cavity (25a) between the valve piston (50) and a front end (24c) of the distributor block (24), said chamber (53) communicating with a region at atmospheric pressure by means of duct (32) formed in the distributor block (24).

8. Braking system comprising a first and a second braking device (10) according to any of claims 1 to 7, wherein the first braking device is arranged to actuate a first brake, associate with a rear right wheel of the vehicle, and the second braking device is arranged to actuate a second brake associated with a rear left wheel of the vehicle.

9. Method of operating a braking device (10) according to any of claims 1 to 7, which can be actuated both manually and automatically,
the manual actuation comprising the steps of:
- acting onto the brake pedal,
- transferring, through the thrusting rod (21) and the stem (23), the thrust exerted by the pedal to the distributor block (24), which in turn exerts a thrust onto the shuttle piston (25) of the braking device (10), thus causing advancement thereof towards the master cylinder (70) of the braking device (10),
- actuating, by means of the advancement of the shuttle piston (25), the servo-device of the braking device (10),
- actuating, by means of the combined action of the shuttle piston (25) and the servo-device, a plunging piston (40) to engage a hydraulic piston (72) in the master cylinder (70), and
- generating, by means of the hydraulic piston (72) in the master cylinder (70), a pressure in the pressure chamber (71), said pressure being adapted to operate one or more brake(s) of the vehicle connected to the braking device (10);
the automatic actuation comprising the steps of:
- providing, by means of the solenoid valve, a suitable hydraulic pressure in the inlet aperture (26) of the hydraulic connection (22),
- transferring said hydraulic pressure, through the channel (36) of the stem (23) and the driving duct (31) of the distributor block (24), to the region (28) comprised between the distributor block (24) and the shuttle piston (25),
- generating, by means of said hydraulic pressure in the region (28) comprised between the distributor block (24) and the shuttle piston (25), a thrust onto the shuttle piston (25), thus causing advancement thereof towards the master cylinder (70) of the braking device (10),
- actuating, by means of the advancement of the shuttle piston (25), the servo-device of the braking system (10),
- actuating, by means of the combined action of the shuttle piston (25) and the servo-device, a plunging piston (40) to engage a hydraulic piston (72) in the master cylinder (70), and
- generating, by means of the hydraulic piston (72) in the master cylinder (70), a pressure in the pressure chamber (71), said pressure being adapted to operate one or more brake(s) of the vehicle connected to the braking device (10).

10. Method of operating a braking system according to claim 8, wherein the first braking device and the second braking device can be operated both manually and automatically according to claim 9,
said method comprising the step of:
- simultaneously operating both braking devices of the braking system
or the step of:
- individually actuating only one of the two braking devices of the braking system and thus performing a steer-by-braking function.

## Patentansprüche

1. Hydraulische Bremsvorrichtung (10) für ein Fahrzeug, umfassend einen Hauptzylinder (70) und eine Servovorrichtung, wobei
- ein Hydraulikkolben (72) des Hauptzylinders (70) eine Druckkammer (71) definiert, die geeignet ist, eine unter Druck stehende Flüssigkeit zu enthalten und in der ein Steuerdruck erzeugt wird, der an eine oder mehrere Bremse(n) des Fahrzeugs übertragen wird;
- ein Stößel (41) der Servovorrichtung eine erste Kammer (42) und eine zweite Kammer (43) der Servovorrichtung definiert, wobei die Kammern Verbindungsmitteln (44, 45, 46) zugeordnet sind, die geeignet sind, wenn sich die Bremsvorrichtung (10) in einem Ruhezustand befindet, eine hydraulische Verbindung zwischen der ersten Kammer (42) und der zweiten Kammer (43) herzustellen und diese Verbindung zu unterbrechen, wenn die Bremsvorrichtung (10) betätigt wird;
- ein Pendelkolben (25), der mit einer einem Bremspedal zuordenbaren Schubstange (21) verbunden ist, in einem Tauchkolben (40), der beweglich mit dem Stößel (41) der Servovorrichtung verbunden ist, abdichtend verschiebbar angebracht ist,
**dadurch gekennzeichnet, dass** die hydraulische Bremsvorrichtung Folgendes umfasst:
- eine hydraulische Kupplung (22), die beweglich mit der Schubstange (21) verbunden ist und eine Einlassöffnung (26) umfasst, die in einen hinteren inneren Hohlraum (22a) der hydraulischen Kupplung (22) mündet und hydraulisch mit einem Magnetventil verbunden ist,
- einen Schaft (23), der auf der Seite seines ersten Endes (23a) der hydraulischen Kupplung (22) zugeordnet ist und auf der Seite seines zweiten Endes (23b) die Form einer kugelförmigen Spitze (27) hat;
- einen Verteilerblock (24), der abdichtend in dem Tauchkolben (40) aufgenommen ist und geeignet ist, an dem Pendelkolben (25) anzuliegen,
wobei die kugelförmige Spitze (27) des Schaftes (23) in einer gelenkigen Weise dem Verteilerblock (24) zugeordnet ist, und wobei der hintere innere Hohlraum (22a) der hydraulischen Kupplung (22) in hydraulischer Verbindung mit einem Durchgangskanal (36) steht, der innerhalb des Schaftes (23) ausgebildet ist, wobei der Durchgangskanal (36) wiederum in hydraulischer Verbindung mit einem Antriebskanal (31) steht, der in dem Verteilerblock (24) ausgebildet ist, wobei der Antriebskanal in einen Bereich (28) mündet, der zwischen dem Verteilerblock (24) und dem Pendelkolben (25) liegt.

2. Vorrichtung nach Anspruch 1, wobei zwischen dem Verteilerblock (24) und der kugelförmigen Spitze (27) des Schaftes (23) zwei Dichtungen (29, 30) angeordnet sind, die in Längsrichtung aufeinander gestapelt sind und Innenflächen (29a, 30a) aufweisen, die in geeigneter Weise so geformt sind, dass sie sich der Kugelform der kugelförmigen Spitze (27) anpassen, wobei die Dichtungen (29, 30) so gestaltet sind, dass sie die Gelenkigkeit der kugelförmigen Spitze (27) und die hydraulische Abdichtung mit der kugelförmigen Spitze (27) gewährleisten.

3. Vorrichtung nach Anspruch 2, wobei der Verteilerblock (24) in einen Hauptkörper (24a) und eine Kappe (24b) unterteilt ist, die an der der hydraulischen Kupplung (22) zugewandten Seite des Verteilerblocks (24a) angeordnet ist, wobei die Kappe (24b) geeignet ist, den Hauptkörper (24a) zu verschließen, wodurch die Dichtungen (29, 30) in einer Längsrichtung zwischen dem Hauptkörper (24a) und der Kappe (24b) des Verteilerblocks (24) gehalten werden.

4. Vorrichtung nach einem der vorhergehenden Ansprüche, wobei der Schaft (23) auf der Seite seines ersten Endes (23a) teilweise in der hydraulischen Kupplung (22) aufgenommen ist, vorzugsweise mit einem gewissen Spiel in Längsrichtung und derart, dass er nicht aus der Kupplung herausrutschen kann.

5. Vorrichtung nach einem der vorhergehenden Ansprüche, wobei der Bereich (28) zwischen dem Verteilerblock (24) und dem Pendelkolben (25) eine hydraulisch abgedichtete Kammer ist.

6. Vorrichtung nach einem der vorhergehenden Ansprüche, wobei der hintere innere Hohlraum (22a) der hydraulischen Kupplung (22) flüssigkeitsdicht mit der Schubstange (21) und dem Schaft (23) zusammenwirkt.

7. Vorrichtung nach einem der vorhergehenden Ansprüche, ferner umfassend eine Vorfüllvorrichtung, wobei die Vorfüllvorrichtung einen Ventilkolben (50), der gleitend in einem Hohlraum (25a) des Pendelkolbens (25) angeordnet ist, und eine Kammer (53) umfasst, die in dem Hohlraum (25a) zwischen dem Ventilkolben (50) und einem vorderen Ende (24c) des Verteilerblocks (24) definiert ist, wobei die Kammer (53) mit einem unter Atmosphärendruck stehenden Bereich durch einen im Verteilerblock (24) ausgebildeten Kanal (32) kommuniziert.

8. Bremssystem umfassend eine erste und eine zweite Bremsvorrichtung (10) nach einem der Ansprüche 1 bis 7, wobei die erste Bremsvorrichtung dazu eingerichtet ist, eine erste Bremse zu betätigen, die einem rechten Hinterrad des Fahrzeugs zugeordnet ist, und die zweite Bremsvorrichtung dazu eingerichtet ist, eine zweite Bremse zu betätigen, die einem linken Hinterrad des Fahrzeugs zugeordnet ist.

9. Verfahren zum Betreiben einer Bremsvorrichtung (10) nach einem der Ansprüche 1 bis 7, die sowohl manuell als auch automatisch betätigt werden kann,
wobei die manuelle Betätigung die Schritte umfasst:
- Einwirken auf das Bremspedal,
- Übertragen der durch das Pedal ausgeübten Schubkraft über die Schubstange (21) und den Schaft (23) auf den Verteilerblock (24), der seinerseits eine Schubkraft auf den Pendelkolben (25) der Bremsvorrichtung (10) ausübt, wodurch dessen Vorwärtsbewegung in Richtung des Hauptzylinders (70) der Bremsvorrichtung (10) bewirkt wird,
- Betätigen der Servovorrichtung der Bremsvorrichtung (10) durch die Vorwärtsbewegung des Pendelkolbens (25),
- Betätigen eines Tauchkolbens (40) durch die kombinierte Wirkung des Pendelkolbens (25) und der Servovorrichtung, so dass dieser Tauchkolben in einen Hydraulikkolben (72) im Hauptzylinder (70) eingreift, und
- Erzeugen eines Drucks in der Druckkammer (71) mittels des Hydraulikkolbens (72) im Hauptzylinder (70), wobei der Druck geeignet ist, eine oder mehrere Bremse(n) des Fahrzeugs zu betätigen, die mit der Bremsvorrichtung (10) verbunden sind;
wobei die automatische Betätigung die Schritte umfasst:
- Bereitstellen eines geeigneten Hydraulikdrucks in der Einlassöffnung (26) der hydraulischen Kupplung (22) durch das Magnetventil,
- Übertragen des hydraulischen Drucks durch den Kanal (36) des Schafts (23) und den Antriebskanal (31) des Verteilerblocks (24) auf den Bereich (28) zwischen dem Verteilerblock (24) und dem Pendelkolben (25),
- Erzeugen einer Schubkraft auf den Pendelkolben (25) mittels des hydraulischen Drucks in dem Bereich (28) zwischen dem Verteilerblock (24) und dem Pendelkolben (25), wodurch dessen Vorwärtsbewegung in Richtung des Hauptzylinders (70) der Bremsvorrichtung (10) bewirkt wird,
- Betätigen der Servovorrichtung der Bremsvorrichtung (10) durch die Vorwärtsbewegung des Pendelkolbens (25),
- Betätigen eines Tauchkolbens (40) durch die kombinierte Wirkung des Pendelkolbens (25) und der Servovorrichtung, so dass dieser Tauchkolben in einen Hydraulikkolben (72) im Hauptzylinder (70) eingreift, und
- Erzeugen eines Drucks in der Druckkammer (71) mittels des Hydraulikkolbens (72) im Hauptzylinder (70), wobei der Druck geeignet ist, eine oder mehrere Bremse(n) des Fahrzeugs zu betätigen, die mit der Bremsvorrichtung (10) verbunden sind.

10. Verfahren zum Betreiben eines Bremssystems nach Anspruch 8, wobei die erste Bremsvorrichtung und die zweite Bremsvorrichtung sowohl manuell als auch automatisch nach Anspruch 9 betätigt werden können,
wobei das Verfahren den Schritt umfasst:
- gleichzeitige Betätigung beider Bremsvorrichtungen des Bremssystems
oder den Schritt umfasst:
- individuelle Betätigung nur einer der beiden Bremsvorrichtungen des Bremssystems und so Ausführen einer "Lenken-durch-Bremsen"-Funktion.

## Revendications

1. Dispositif de freinage hydraulique (10) pour un véhicule, comprenant un maître-cylindre (70) et un dispositif d'asservissement, dans lequel
- un piston hydraulique (72) du maître-cylindre (70) définit une chambre de pression (71) qui est adaptée pour contenir un liquide sous pression et dans laquelle est générée une pression de commande qui est transmise à un ou plusieurs frein(s) du véhicule ;
- un plongeur (41) du dispositif d'asservissement définit une première chambre (42) et une deuxième chambre (43) du dispositif d'asservissement, lesdites chambres étant associées à des moyens de communication (44, 45, 46) adaptés pour établir, lorsque le dispositif de freinage (10) est dans une condition de repos, une communication hydraulique entre la première chambre (42) et la deuxième chambre (43) et pour interrompre ladite communication lorsque le dispositif de freinage (10) est actionné ;
- un piston navette (25), relié à une bielle de poussée (21) associable à une pédale de frein, est monté pour pouvoir être coulissé de manière étanche dans un piston plongeur (40) solidaire de manière mobile du plongeur (41) du dispositif d'asservissement, le dispositif de freinage hydraulique comprenant en outre une électrovanne,
**caractérisé en ce que** le dispositif de freinage hydraulique comprend
un coupleur hydraulique (22) relié de manière solidaire et mobile à la bielle de poussée (21) et comprenant un orifice d'entrée (26) débouchant dans une cavité interne arrière (22a) du coupleur hydraulique (22) et relié hydrauliquement à l'électrovanne,
une tige (23) associée, sur le côté d'une première extrémité (23a) de celle-ci, au coupleur hydraulique (22) et ayant, sur le côté de sa deuxième extrémité (23b), la forme d'une pointe sphérique (27) ;
- un bloc distributeur (24) reçu de manière étanche au sein du piston plongeur (40) et adapté pour venir en butée contre le piston navette (25),
dans lequel la pointe sphérique (27) de la tige (23) est associée, de manière articulée, au bloc distributeur (24), et dans lequel la cavité interne arrière (22a) du coupleur hydraulique (22) est en communication hydraulique avec un canal de passage (36) formé au sein de la tige (23), ledit canal de passage (36) étant à son tour en communication hydraulique avec un conduit d'entraînement (31) formé dans le bloc distributeur (24), ledit conduit d'entraînement débouchant dans une région (28) comprise entre le bloc distributeur (24) et le piston navette (25).

2. Dispositif selon la revendication 1, dans lequel, entre le bloc distributeur (24) et la pointe sphérique (27) de la tige (23) sont agencés deux joints (29, 30) empilés longitudinalement l'un sur l'autre et ayant des surfaces internes (29a, 30a) convenablement formées de façon à épouser la forme sphérique de la pointe sphérique (27), lesdits joints (29, 30) étant configurés de façon à assurer l'articulation de la pointe sphérique (27) et à assurer l'étanchéité hydraulique avec ladite pointe sphérique (27).

3. Dispositif selon la revendication 2, dans lequel le bloc distributeur (24) est divisé en un corps principal (24a) et un capuchon (24b), agencé du côté du bloc distributeur (24a) tourné vers le coupleur hydraulique (22), ledit capuchon (24b) étant adapté pour se refermer sur le corps principal (24a), moyennant quoi lesdits joints (29, 30) sont retenus, dans une direction longitudinale, entre le corps principal (24a) et le capuchon (24b) du bloc distributeur (24).

4. Dispositif selon l'une quelconque des revendications précédentes, dans lequel la tige (23) est partiellement logée, sur le côté de sa première extrémité (23a), au sein du coupleur hydraulique (22), de préférence avec un certain jeu dans la direction longitudinale et de sorte qu'elle ne puisse pas glisser hors dudit coupleur.

5. Dispositif selon l'une quelconque des revendications précédentes, dans lequel la région (28) comprise entre le verrou distributeur (24) et le piston navette (25) est une chambre hydrauliquement étanche.

6. Dispositif selon l'une quelconque des revendications précédentes, dans lequel la cavité interne arrière (22a) du coupleur hydraulique (22) coopère de manière étanche aux fluides avec la bielle de poussée (21) et la tige (23).

7. Dispositif selon l'une quelconque des revendications précédentes, comprenant en outre un dispositif de préremplissage, ledit dispositif de préremplissage comprenant un piston à vanne (50) agencé de manière coulissante dans une cavité (25a) du piston navette (25), et une chambre (53) définie dans ladite cavité (25a) entre le piston à vanne (50) et une extrémité avant (24c) du bloc distributeur (24), ladite chambre (53) communiquant avec une région à pression atmosphérique au moyen d'un conduit (32) formé dans le bloc distributeur (24).

8. Système de freinage comprenant un premier et un deuxième dispositif de freinage (10) selon l'une quelconque des revendications 1 à 7, dans lequel le premier dispositif de freinage est agencé pour actionner un premier frein, associer à une roue arrière droite du véhicule, et le deuxième dispositif de freinage est agencé pour actionner un deuxième frein associé à une roue arrière gauche du véhicule.

9. Procédé de fonctionnement d'un dispositif de freinage (10) selon l'une quelconque des revendications 1 à 7, qui peut être actionné à la fois manuellement et automatiquement, l'actionnement manuel comprenant les étapes de :
action sur la pédale de frein,
transfert, par l'intermédiaire de la bielle de poussée (21) et de la tige (23), de la poussée exercée par la pédale au bloc distributeur (24), qui à son tour exerce une poussée sur le piston navette (25) du dispositif de freinage (10), provoquant son avancement vers le maître-cylindre (70) du dispositif de freinage (10),
actionnement, au moyen de l'avancement du piston navette (25), du dispositif d'asservissement du dispositif de freinage (10),
actionnement, au moyen de l'action combinée du piston navette (25) et du dispositif d'asservissement, d'un piston plongeur (40) pour engager un piston hydraulique (72) dans le maître-cylindre (70), et
- génération, au moyen du piston hydraulique (72) dans le maître-cylindre (70), d'une pression dans la chambre de pression (71), ladite pression étant adaptée pour faire fonctionner un ou plusieurs frein(s) du véhicule relié(s) au dispositif de freinage (10) ;
l'actionnement automatique comprenant les étapes de :
fourniture, au moyen de l'électrovanne, d'une pression hydraulique convenable dans l'orifice d'entrée (26) de la liaison hydraulique (22),
transfert de ladite pression hydraulique, à travers le canal (36) de la tige (23) et le conduit d'entraînement (31) du bloc distributeur (24), à la région (28) comprise entre le bloc distributeur (24) et le piston navette (25),
- génération, au moyen de ladite pression hydraulique dans la région (28) comprise entre le bloc distributeur (24) et le piston navette (25), d'une poussée sur le piston navette (25), provoquant ainsi son avancement vers le maître-cylindre (70) du dispositif de freinage (10),
- actionnement, au moyen de l'avancement du piston navette (25), du dispositif d'asservissement du dispositif de freinage (10)
- actionnement, au moyen de l'action combinée du piston navette (25) et du dispositif d'asservissement, d'un piston plongeur (40) pour engager un piston hydraulique (72) dans le maître-cylindre (70), et
- génération, au moyen du piston hydraulique (72) dans le maître-cylindre (70), d'une pression dans la chambre de pression (71), ladite pression étant adaptée pour faire fonctionner un ou plusieurs frein(s) du véhicule relié(s) au système de freinage (10).

10. Procédé de fonctionnement d'un système de freinage selon la revendication 8, dans lequel le premier dispositif de freinage et le deuxième dispositif de freinage peuvent être mis en fonctionnement à la fois manuellement et automatiquement selon la revendication 9,
ledit procédé comprenant l'étape de :
- actionnement simultané des deux dispositifs de freinage du système de freinage ou l'étape de :
- actionnement individuel d'un seul des deux dispositifs de freinage du système de freinage et réalisation ainsi d'une fonction de direction par freinage.
